# EUROPÄISCHE PATENTSCHRIFT

(11) **EP 0 845 320 B1**
(45) Veröffentlichungstag und Bekanntmachung des Hinweises auf die Patenterteilung: **28.11.2001**
(21) Anmeldenummer: 97115398.6
(22) Anmeldetag: 05.09.1997
(51) Int. Cl.: B23H 7/02, B23H 1/00

(54) **Verfahren und Vorrichtung zum funkenerosiven Bearbeiten**
Method and apparatus for electroerosion machining
Procédé et dispositif d'usinage par électroérosion

(30) Priorität: 02.10.1996 DE 19640790
(43) Veröffentlichungstag der Anmeldung: 03.06.1998
(73) Patentinhaber: AGIE SA, 6616 Losone (CH)
(72) Erfinder: Bühler, Ernst, 6616 Losone (CH); Etter, Hansjörg, 6653 Verscio (CH); Wehrli, Peter, 6661 Auressio (CH)
(74) Vertreter: Niederkofler, Oswald A. Dipl.-Phys.

(56) Entgegenhaltungen:
- EP-A- 0 707 917
- DE-A- 3 524 377
- DE-A- 3 738 251
- DE-A- 3 824 006
- PATENT ABSTRACTS OF JAPAN vol. 010, no. 273 (M-518), 17.September 1986 & JP 61 095823 A (MITSUBISHI ELECTRIC CORP), 14.Mai 1986,

## Beschreibung

Die Erfindung betrifft ein Verfahren und eine Vorrichtung zum funkenerosiven Bearbeiten eines Werkstücks nach den Oberbegriffen der Ansprüche 1 bzw. 10.

Bei Werkzeugmaschinen zur Feinbearbeitung von Werkstücken mit Hilfe eines Bearbeitungswerkzeuges, z.B. CNC-gesteuerte Fräsanlagen, Spananlagen, Schleifanlagen, Erosionsanlagen etc., wird ein enorm hoher Aufwand betrieben, um die Relativbewegung zwischen dem Bearbeitungswerkzeug und dem Werkstück exakt und reproduzierbar durchzuführen. Hierfur werden üblicherweise Antriebssysteme verwendet, z.B. kartesische Antriebssysteme, etwa kartesische Kreuztische, welche unter numerischer Steuerung in zueinander senkrechten Richtungen in einer Ebene verschiebbar sind. Solche Antriebssysteme sind mit dem Bearbeitungswerkzeug und/oder dem Werkstück gekoppelt, um die gewünschte Bearbeitungskontur erzeugende Relativbewegung zwischen Werkstuck und Werkzeug zu erzeugen. Es wird in diesem Zusammenhang auf die ISO-Norm R 841 "Nomenclature des axes et des mouvements pour la commande numerique des machines", welche viele bekannte Achsanordnungen von Antriebssystemen für Werkzeugmaschinen zeigt. Bei einer etwas aufwendigen, z.B. mehrachsigen Antriebskinematik zwingen diese bekannten Anordnungen der Antriebssysteme meist zu einer relativ aufwendigen Konstruktion des Arbeitsraumes in der unmittelbaren Werkstücksumgebung.

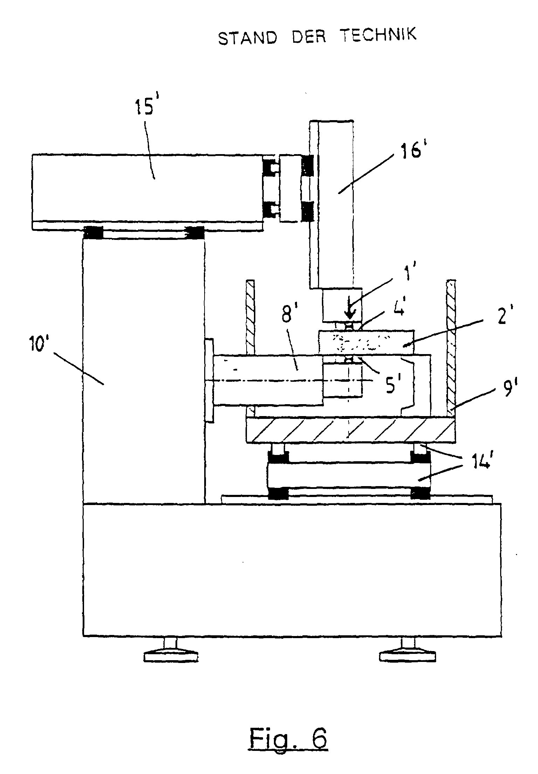

Als Beispiel für eine derartige Werkzeugmaschine sei eine Drahterosionsvorrichtung genannt, bei welcher das Bearbeitungswerkzeug in Form einer Erodierdrahtelektrode relativ zum Werkstück bewegt wird, um eine elektrische Funkenentladung zwischen dem Erodierdraht und dem Werkstück hervorzurufen. Dabei wird ausgehend von einer Startbohrung eine Kontur mittels des Erodierdrahtes in das Werkstück geschnitten. Eine solche bekannte Drahterosionsvorrichtung ist beispielsweise in Fig. 6 dargestellt: Diese enthält zwei, im Abstand voneinander und in Drahtvorschubrichtung gesehen, vor und hinter einem Werkstück 2' angeordnete Drahtführungsköpfe 4' und 5', welche eine Erodierdrahtelektrode 1' in der durch den eingezeichneten Pfeil dargestellten Drahttransportrichtung durch das Werkstück 2' hindurch führen. Beide Drahtführungsköpfe 4', 5' befinden sich jeweils an den vorderen Enden eines Z-Antriebes 16' bzw. eines unteren Tragarms 8', welche jeweils an einem Maschinengestell 10', hier einem C-Gestell, befestigt sind. Der Z-Antrieb 16' mit dem oberen Führungskopf 4' ragt dabei von oben vertikal in den Arbeitsraum der Drahterosionsvorrichtung; und der untere Tragarm 8' läuft durch die Seitenwand eines Behälters 9' zur Aufnahme einer dielektrischen Spülflüssigkeit hindurch bis zum Arbeitsraum. Die zum funkenerosiven Schneiden notwendige, die Schnittkontur bestimmende Relativbewegung zwischen dem Werkstück 2' und der Bearbeitungselektrode 1' besorgt ein mit dem Behälter 9', mit welchem das Werkstück 2' über Spannmittel 11' starr verbunden ist, gekoppelter X/Y-Hauptachsenantrieb 14'. Zum Schneiden konischer Schnitte ist zusätzlich ein mit dem Z-Antrieb 16' gekoppelter U/V-Antrieb 15' vorgesehen.

Nachteilig bei dieser Anordnung der Achsantriebe ist insbesondere, dass der den unteren Führungskopf 5' tragende Tragarm 8' in aufwendiger Weise gegenüber dem Arbeitsbehälter 9' während der X/Y-Hauptbewegungen abzudichten ist, und dass diese Abdichtungen die Genauigkeit beeinträchtigen.

Bekannt sind auch Drahterosionsvorrichtungen, bei welchen der untere Drahtführungsarm L-förmig ausgebildet ist und von oben in einen Arbeitsbehälter eintaucht. Eine derartige Anlage ist beispielsweise in der DE-OS 37 38 251 Al beschrieben. Hierdurch wird zwar die Problematik der Abdichtung des Drahtführungsarms gegenüber dem Arbeitsbehälter umgangen, jedoch unter Inkaufnahme einer unnötig vergrösserten Maschinendimension, eines komplizierten Drahtverlaufes, einer langen Dehnungsstrecke bei thermischen Schwankungen und einer verschlechterten Grundsteifigkeit des Maschinenaufbaus. Bei diesem aber auch bei dem zuvor genannten Anlagetyp kommt als weiterer Nachteil hinzu, dass die untere Drahtführung samt Führungskopf und Führungsarm stark exponiert ist, d.h. sehr viel Platz in unmittelbarer Werkstücksumgebung belegt, so dass eine nicht unerhebliche Kollisionsgefahr während der Bearbeitung des Werkstücks besteht.

Zur Vermeidung des oben genannten Dichtungsproblems sind im Stand der Technik weitere Anlagenkonzepte bekannt, welche jedoch bereits in ihrer Bearbeitungskinematik von dem einleitend genannten Anlagenkonzept abweichen:

Beispielsweise ist im Prospekt H-189E 9408/1 (FP) (10/1993) "UPH-1 MV-10 Wire Electrical Discharge Machine for Ultraprecision Machining of Hard Metals" der Fa. Makino eine Hochpräzisions-Drahterosionsvorrichtung gezeigt, bei welcher das Werkstück an einem Maschinengestell in vertikaler Position aufgehängt ist und ein Erodierdraht horizontal bewegbar zwischen einer vorderen und einer hinteren Drahtführung geführt ist. Aufgrund der vertikalen Werkstuckslage ist dieses Maschinenkonzept nur für kleine Werkstücke und kleine Verfahrwege sinnvoll einsetzbar. Nachteilig ist bei dieser Anordnung außerdem, daß beide Drahtführungen und die im Führungskopf mit integrierten Zusatzmittel zur Zuführung des Entladestromes und der dieelektrischen Spülflüssigkeit während der Bearbeitung in der Spülflüssigkeit eingetaucht und dadurch einem verstärkten chemischen Verschleiß, z.B. durch Korrision, aber auch einem mechanischen Verschleiß, z.B. durch während der Bearbeitung anfallende in die Drahtführung eindringende Werkstuckspartikel ausgesetzt sind.

Ferner zeigt die o.g. DE-OS 37 38 251 A1 eine Drahterosionsvorrichtung, bei welcher das Werkstück auf dem Boden eines Arbeitsbehälters fixiert ist. Der Behälter sitzt unmittelbar auf einem X/Y-Kreuztisch, der eine Öffnung aufweist, wodurch die untere Drahtführung bis dicht an das Werkstück heran hindurchtritt. Nachteilig ist hierbei insbesondere die komplexe Dichtung, mit welcher die untere Drahtführung gegenüber dem X/Y-Tisch abgedichtet ist.

Ein Verfahren und eine Vorrichtung zum funkenerosiven Schneiden nach dem Oberbegriff der Ansprüche 1 bzw. 10 ist aus der EP 0 707 917 A1 bekannt. Um Dichtungsprobleme zu vermeiden, die bei der Durchführung eines gegenüber dem Arbeitsbehälter beweglichen unteren Drahtführungsarmes, der durch die Behälterwand hindurch tritt, auftreten, wird ein Maschinenkonzept vorgeschlagen, bei welchem der X/Y-Hauptachsenantrieb auf dem Boden eines Arbeitsbehälters auf Schienen gefuhrt ist. Der Arbeitsbehalter ist fest mit dem Maschinenbett z.B. eines C-Maschinengestells verbunden. Damit ist aber das X/Y-Antriebssystem während der Werkstücksbearbeitung vollständig in einer Arbeitsflüssigkeit eingetaucht, was im Laufe der Zeit zu massiven Schädigungen durch chemischen Verschleiß, zumindest aber zu einer Beeinträchtigung der Genauigkeit führen kann.

Die DE 35 24 377 A1 der Anmelderin beschreibt eine Drahterosionsmaschine in klassischer C-Bauweise, in der verschiedene Anordnungen der X/Y-Antriebe diskutiert werden.

DE 38 24 006 A1 beschäftigt sich mit der Gestaltung eines automatisch absenkbaren Behälters für eine Senkerosionsanlage mit feststehendem Tisch (C-Bauweise).

Zum Stand der Technik werden noch folgende Entgegenhaltungen genannt: DE 37 23 250 A1, US 4,762,974, DE 31 23 428 A1, DE 34 09 830 C2, 42 37 169A1, US 4,990,737, DE 24 43 841 A1 und JP-OS 61-244415.

Der Vollständigkeit halber wird noch auf die JP-OS 6-134622 und die JP-OS 63-216629 verwiesen, welche jeweils Drahterosionsvorrichtungen vom Typ offenbaren, bei welchen das Werkstück unbewegt ist und die X/Y-Hauptbewegungen sowie die U/V-Bewegungen durch Verfahren einer unteren und oberen Drahtführung erzeugt werden.

Die vorliegende Erfindung zielt darauf ab, den Grundaufbau bekannter Funkenerosionsvorrichtungen insbesondere hinsichtlich der Bearbeitungsgenauigkeit zu verbessern. Des weiteren möchte die Erfindung ein entsprechendes Verfahren zum funkenerosiven Bearbeiten von Werkstücken zur Verfügung stellen.

Die Erfindung erreicht dieses Ziel durch die Gegenstände der Ansprüche 1 und 10. Vorteilhafte Ausfuhrungsbeispiele der Erfindung sind in den jeweils abhängigen Ansprüchen beschrieben.

Danach wird bei einem erfindungsgemäßen Verfahren und einer entsprechenden Vorrichtung zum funkenerosiven Bearbeiten eines Werkstückes mittels einer oder mehrerer Draht- oder Senkelektroden, die in oberhalb und unterhalb eines Arbeitsraumes angeordneten Führungsköpfen geführt werden, das Werkstück über einen X/Y-Hauptachsenantrieb bewegt und von mindestens einer der Bearbeitungselektroden erodiert. Dabei ist die X/Y-Ebene horizontal ausgerichtet und der X/Y-Hauptachsenantrieb, der die Bewegung des Werkstuckes in der X/Y-Ebene ausführt, oberhalb des Arbeitsraumes am ruhenden Maschinengestell angeordnet. Das Maschinengestell, ein Behälter zur Aufnahme einer Arbeitsflüssigkeit und der oder jeder untere Führungskopf führen dabei keine X/Y-Bewegung aus.

Das Werkstuck oder mehrere Werkstücke auf einer Palette werden demnach in einer im wesentlichen horizontalen Lage im Arbeitsraum erodiert. Dabei spricht man von einer "im wesentlichen" horizontalen Lage des Werkstücks (oder Palette), da beim Aufspannen kleine Ausrichtfehler entstehen können. Diese Ausrichtfehler können selbstverständlich in bekannter Weise korrigiert werden. Weiter spricht man von einer "im wesentlichen" vertikalen Lage der Bearbeitungselektrode mit Rücksicht darauf, dass die vorgenannten Aufspannfehler durch kleine Korrekturmassnahmen behoben werden können, und somit eine Änderung der Winkellage der Bearbeitungselektrode mit sich führen. Weiter bezieht sich die "im wesentlichen" vertikale Lage der Bearbeitungselektrode auf deren Grundposition z.B. bei einem zylindrischen Drahterosionsschnitt. Lediglich der Vollständigkeit halber wird darauf hingewiesen, dass es sich bei den genannten Korrekturmassnahmen meist um sehr kleine Abweichungen von der Vertikalen handelt. Dagegen sind es z.B. beim Konischschneiden kleine bis sehr grosse Abweichungen.

Die Begriffe "oberhalb" bzw. "unterhalb" sowie "oben" bzw. "unten" werden nachfolgend aus Gründen der leichteren Lesbarkeit verwendet. Sie beziehen sich auf Werkzeugmaschinen üblicher, etwa in der DE-OS 37 38 251 A1 gezeigten, Arbeitsaufstellung sowie auf in horizontaler Position angeordnete Werkstücke.

Nach dem erfindungsgemässen Konzept ist das Werkstück oder eine Palette mit Werkstücken über geeignete Spannmittel mit dem Hauptachsenantrieb gekoppelt und wird von oben in den Arbeitsraum der Werkzeugmaschine gehalten, der beispielsweise seitlich durch einen Behälter zur Aufnahme von Arbeitsflüssigkeit begrenzt ist. Auf diese Weise erübrigen sich etwaige Dichtungsmittel zum Abdichten der bewegten Abschnitte gegenüber der Behälterwand während der X/Y-Hauptbewegung des Werkstückes. Hierdurch ist ein geringerer Verschleiss einerseits, aber andererseits auch eine höhere Genauigkeit der X/Y-Hauptbewegung durch die Reibungsfreiheit und durch die günstige Anordnung des Hauptachsenantriebes verbunden. Außerdem ist das Werkstück vorteilhaft derart aufgehängt, daß ein freier Zugang an das Werkstück mindestens von unten und oben vorhanden ist, was den Überblick über den Arbeitsraum und dessen Pflege deutlich erleichtert.

Die erfindungsgemäßen Verfahren und Vorrichtung weisen außerdem folgende Vorteile auf:
- die Tatsache, daß das Werkstück unmittelbar, d.h. ohne lange Übertragungswege, mit dem Hauptachsenantrieb gekoppelt ist, bringt einen kurzen Kraftfluß zwischen dem Bearbeitungswerkzeug und dem Werkstück mit sich, d.h. eine hohe mechanische Steifigkeit und damit eine hohe Genauigkeit der Bearbeitung, ebenfalls kurze und ggf. symmetrische Dehnungsstrecken, d.h. ein thermisch kompensierendes Verhalten, sowie kurze Strompfade für eine bessere Impulsubertragung zur Funkenstrecke und damit ein einfaches Verlegen der Stromzuführungsbänder. Dies macht das erfindungsgemäße Konzept insbesondere für die Anwendung in funkenerosiven Hochgeschwindigkeitsanlagen interessant, da einer oder mehrere Generatoren in unmittelbarer Nähe, z.B. oberhalb und unterhalb des Arbeitsraumes der Anlage angeordnet sein können, d.h. ohne lange und verlustreiche Stromzufuhrleitungen;
- der im wesentlichen freie Zugang zum Werkstück ermöglicht die Implementierung von Automatisierungsmaßnahmen, z.B. die Automatisierung des Arbeitsbehälters, die Einbeziehung von Robotern in Produktions- bzw. Transferstraßen mit Palettisiersystemen;
- ein durch die erfindungsgemaße Werkstückslage bedingter fester Bearbeitungspunkt, womit die Bearbeitung des Werkstucks stets überwacht werden kann. Der Operator kann den Bearbeitungspunkt stets in der Mitte seines Blickfeldes behalten. Auch ist ein Monitoring mit automatischen Überwachungsmitteln einfach realisierbar; und
- die erfindungsgemäße Werkstückslage und der im wesentlichen freie Zugang zum Arbeitsraum bringt weiterhin mit sich, daß ein etwaiges Ausfallstück aus dem zu bearbeitenden Werkstück auf einfache Weise aus dem Arbeitsraum abgeführt werden kann. Dies ist für die Durchführung von mikroskopisch kleinen Bearbeitungen an Werkstücken besonders vorteilhaft.

Vorzugsweise ist ein oder jeder obere Führungskopf ebenfalls ein Teil der ruhenden Einheit. Alternativ dazu ist der oder jeder obere Führungskopf und/oder der oder jeder untere Führungskopf über einen gemeinsamen oder jeweils einen individuellen Z-Antrieb höhenverstellbar; und/oder der oder jeder obere Führungskopf ist über einen gemeinsamen oder jeweils einen individuellen U/V-Antrieb bewegbar und ggf. den U/V-Antrieb mit der ruhenden Einheit verbunden.

Hierdurch verfügt die erfindungsgemäße Vorrichtung über eine mindestens fünfachsige Antriebskinematik der Relativbewegung zwischen Bearbeitungselektrode und Werkstück, welche eine Vielzahl Bearbeitungsgeometrien ermöglicht. Die gesamte Antriebskinematik ist dabei vorzugsweise im oberen Bereich des Arbeitsraumes, oberhalb des Werkstückes und außerhalb eines etwaigen Arbeitsbehälters angeordnet, wodurch der Arbeitsraum weiterhin leicht zugänglich und übersichtlich bleibt, und außerdem die kinematischen Komponenten vor einem verstärkten Verschleiß und Verschmutzung geschützt sind.

Ferner hat die Einrichtung z.B. eines oberen und eines unteren Z-Antriebes zur Höhenverstellung der zugehörigen Führungsköpfe entscheidende Vorteile: Etwa für drahterosive Bohrungen erreicht man eine Verdoppelung der Bohrleistung bei gleichzeitigem Einsatz einer oberen und einer unteren Bohrelektrode. Zudem wird die Bohrung viel genauer, weil die beiden Bohrelektroden nur die halbe Länge einer Einzelelektrode aufweisen müssen und damit der Durchbruch im Werkstückinneren erfolgt. Dies ist besonders wichtig für Mikrobohrungen, welche im Aspektverhältnis, d.h. Länge zu Durchmesser, begrenzt sind. Auch dieses Aspektverhältnis kann nahezu verdoppelt werden.

Weitere Vorteile ergeben sich auch bei einer Senkbearbeitung mit einer oberen und einer unteren Senkelektrode. Eine zweiseitige Bearbeitung eines Werkstückes ohne Umspannung ergibt zusätzlich zum Zeitgewinn, auch eine bedeutende Verbesserung der Präzision, da die Umspannfehler vollständig eliminiert werden.

Schliesslich können beim funkenerosiven Drahtschneiden mit in Z-Richtung bewegbaren oberen und unteren Führungsköpfen die Vertikalkonturen unebener oder ungleich hoher Werkstücke einfach kompensiert werden. Dies führt ebenfalls zu höheren Abtragsleistungen und/oder besserer Präzision.

Aufgrund dieser Vorteile ist das erfindungsgemässe Anlagekonzept insbesondere in Verbindung mit der funkenerosiven Bearbeitung von Werkstücken vorteilhaft. Bei einer bevorzugten Variante wird ein Verfahren und eine Vorrichtung zum funkenerosiven Bearbeiten eines Werkstückes vorgeschlagen, bei welchen die Bearbeitungselektrode ein Erodierdraht ist, der in einem oberen - in Drahtvorschubrichtung vor dem Werkstück angeordneten - Führungskopf und einem unteren - in Drahtvorschubrichtung nach Werkstück angeordneten - Führungskopf geführt ist, wobei der obere und der untere Führungskopf symmetrisch zueinander und im wesentlichen vertikal übereinander angeordnet sind. Der Erodierdraht wird dabei im wesentlichen vertikal zwischen dem oberen und dem unteren Führungskopf durch den Arbeitsraum hindurchgeführt.

Die symmetrische Vertikalausrichtung der Führungsköpfe hat den Vorteil, dass freitragende Führungsarme herkömmlicher Anlagen nicht mehr notwendig sind. Dies bringt einerseits eine gegenüber herkömmlichen Anlagen erhöhte Steifigkeit der Drahtführung mit sich, andererseits vorteilhaft auch einen kurzen, im wesentlichen vertikalen Drahtverlauf, und damit eine geringe Verformung und Beanspruchung des Erodierdrahtes, was der Betriebssicherheit und Präzision beimDrahttransport zugute kommt.

Bei einer bevorzugten Variante einer derartigen Funkenerosionsvorrichtung ist vorzugsweise der obere Führungskopf mit einem U/V-Antrieb zum kartesischen Verstellen des oberen gegenüber dem unteren Führungskopf gekoppelt. Bei dieser Variante ist also der untere Führungskopf unbewegt und mit dem Maschinengestell starr verbunden. Lediglich der obere Führungskopf führt eine geringfügige Bewegung in U/V-Richtung zum Erzeugen konischer Schnitte aus. Daher ist der Erodierdraht vorteilhaft einer besonders geringen Beanspruchung ausgesetzt; er muss lediglich der geringen U/V-Bewegung des oberen Führungskopfes folgen. Vorzugsweise ist der obere Führungskopf ferner mit dem Z-Antrieb zur Höhenverstellung gekoppelt, wobei der kartesische U/V-Antrieb vor oder nach dem Z-Antrieb zwischengeschaltet ist. Hierdurch ist die gesamte Antriebsanordnung der Funkenerosionsvorrichtung kompakt zusammengefasst und aus dem Arbeitsraum heraus verlagert. Trotz der aufwendigen 5-Achsenkinematik bleibt der Arbeitsraum dennoch weiterhin übersichtlich und leicht zugänglich. Dies gilt vor allem in Verbindung mit der nachfolgend beschriebenen Rahmenbauweise des Hauptachsenantriebes, wenn der rahmenförmige Hauptachsenantrieb in einem Gehäusekasten untergebracht ist, auf dem auch der U/V-Antrieb linear verschiebbar aufgesetzt ist.

Eine Drahterosionsvorrichtung mit einer besonders hohenmechanischen Steifigkeit wird vorteilhaft dann erreicht, wenn das Maschinengestell, der ggf. vorhandene Arbeitsbehälter und der untere Führungskopf bezüglich des Hauptachsenantriebs eine starr verbundene, ruhende Maschineneinheit bilden. Die X/Y-Hauptbewegung wird allein durch den mit dem Werkstück gekoppelten Hauptachsenantrieb erzeugt, der seinerseits mit der aus dem Maschinengestell, ggf. dem Arbeitsbehälter und der unteren Drahtführung bestehenden Einheit verbunden ist. Vorzugsweise ist der obere Führungskopf fest oder über den Z-Antrieb und/oder über den U/V-Antrieb mit der ruhenden Maschineneinheit verbunden.

Bei einer bevorzugten Drahterosionsvorrichtung ist die oder jede drahtförmige Bearbeitungselektrode im wesentlichen in vertikaler Richtung durch einen Behälter und den entsprechenden unteren Führungskopf geführt, wobei der untere Führungskopf die zugeordnete drahtförmige Bearbeitungselektrode so dicht umschliesst, dass ein Auslaufen eines Dielektrikums aus dem Behälter verhindert wird oder kontrolliert erfolgt.

Bei einer besonders bevorzugten Drahterosionsvorrichtung sind mehrere drahtförmige Bearbeitungselektroden zusammen mit mehreren oberen Führungsköpfen bzw. mehreren unteren Führungsköpfen vorgesehen, wobei die drahtförmigen Bearbeitungselektroden jeweils untereinander beabstandet und im wesentlichen vertikal ausgerichtet sind, derart, dass gleichzeitig mehrere identische Schnittkonturen erodiert werden. Vorzugsweise sind mehrere drahtförmige Bearbeitungselektroden von unterschiedlicher Qualität und/oder unterschiedlichem Durchmesser in mehreren oberen Führungsköpfen bereitgestellt. Es wird jeweils eine der Bearbeitungselektroden ausgewählt und mittels dem zugeordneten Z-Antrieb und/oder U/V-Antrieb oberhalb eines zugeordneten unteren Führungskopf positioniert. Im Falle mehrerer unterer Führungsköpfe wird das Werkstück über den X/Y-Hauptachsenantrieb so bewegt, dass der Startpunkt der auszuführenden Kontur mit dem ausgewählten unteren Führungskopf übereinstimmt. Ferner wird die drahtförmige Bearbeitungselektrode automatisch eingefädelt und nach beendeter Bearbeitung automatisch abgetrennt.

Bei einer besonders bevorzugten Senkerosionsvorrichtung sind mehrere Senkelektroden mit mehreren oberen Führungsköpfen und/oder mehrere Senkelektroden mit mehreren unteren Führungsköpfen vorgesehen, wobei die Senkelektroden untereinander beabstandet und im wesentlichen vertikal ausgerichtet sind, derart, dass gleichzeitig mehrere identische Senkkonturen erodiert werden. Vorteilhaft sind mehrere Senkelektroden von unterschiedlicher Qualität und/oder unterschiedlichem Durchmesser und/oder unterschiedlicher Form in mehreren oberen Führungsköpfen und/oder mehreren unteren Führungsköpfen bereitgestellt. Eine ausgewählte Senkelektrode wird mittels dem zugeordneten Z-Antrieb und/oder dem U/V-Antrieb und/oder dem Hauptachsenantrieb beim Startpunkt der auszuführenden Erosionsbearbeitung positioniert. Dabei können mittels dieser Antriebe Senkkonturen oder Startbohrungen erodiert werden. Bei einer besonders bevorzugten Variante werden die Startbohrungen gleichzeitig mit einer ausgewählten Senkelektrode in einem oberen Führungskopf von oben und einer ausgewählten Senkelektrode in einem unteren Führungkopf von unten erodiert.

In Zukunft werden funkenerosive Massen-Produktionsverfahren für Mikroteile eingesetzt, welche Startbohrungen, Drahtschneidoperationen und beidseitige Senkerosionsoperationen benötigen. Mehrelektrodenanlagen der genannten Art vervielfachen hier die Produktionsleistung und die Flexibilität. Da auf den besagten oberen und unteren Z-Antrieben auch Manipulationsmittel wie z.B. Vakuumpipetten angebracht werden können, sind solche Anlagen besonders für die automatische Massenproduktion von Mikroteilen geeignet. Bei einer bevorzugten Weitergestaltung des erfindungsgemässen Anlagenkonzeptes ist der erfindungsgemässe Hauptachsenantrieb innen offen bzw. rahmenförmig ausgebildet, derart, dass die Werkzeugführung z.B. ausgehend von einem Maschinengestell durch den Hauptachsenantrieb hindurch von oben in den Arbeitsraum verläuft. Bei einer besonders bevorzugten kompakten Bauweise des erfindungsgemässen Hauptachsenantriebes ist dieser rahmenförmig und in, Elektrodenvorschubrichtung gesehen, offen ausgebildet. Er verfügt über einen ersten, in X-Hauptachsenrichtung verschiebbaren X-Rahmen, innerhalb dessen ein zweiter, in Y-Hauptachsenrichtung verschiebbarer Y-Rahmen geführt ist. Der erste X-Rahmen ist bevozugt unmittelbar am kastenförmigen Maschinengestell verschiebbar geführt. Das zu bearbeitende Werkstück oder eine Palette mit Werkstücken ist über geeignete Spannmittel am Y-Rahmen befestigt. In vorteilhafter Weise wird dabei die freitragende Länge zwischen dem Werkstück und dem Hauptachsenantrieb auf ein Minimum reduziert, so dass der Hauptachsenantrieb eine hohe Steifigkeit aufweist und die Kraftübertragung mit hoher dynamischer Güte erfolgen kann. Ragt ferner die Werkzeugführung der Bearbeitungselektrode, von oben in den erfindungsgemässen rahmenförmigen Hauptachsenantrieb hinein, so bildet der Hauptachsenantrieb zusammen mit der Bearbeitungselektrode eine kompakte, gegenüber äusseren Einflüssen geschützte Einheit. Beispielsweise führt ein oberer Z-Antrieb und/oder ein unterer Z-Antrieb durch die Rahmenöffnung des rahmenförmigen X/Y-Hauptachsenantriebes die Bewegung in Z-Richtung aus.

In Verbindung mit dem rahmenförmigen Aufbau des Hauptachsenantriebes sind bevorzugt mehrere Bearbeitungselektroden nebeneinander angeordnet und ragen in den rahmenförmigen Hauptachsenantrieb hinein. Dabei sind mehrere Bearbeitungselektroden derselben oder unterschiedlichen Art modulartig am Maschinengestell der Werkzeugmaschine angeordnet. Diese Bearbeitungselektroden lassen sich samt Führungsköpfen ohne weiteres austauschen und durch andere Werkzeuge ersetzen. Dieses modulare Konzept eignet sich insbesondere für Funkenerosionsanlagen, bei denen - wie zuvor beschrieben - mehrere verschiedenartige Draht- oder Senkelektroden oder eine Kombination von Draht- und Senkelektroden in der genannten Art zur Bearbeitung von einem oder mehreren im Arbeitsraum aufgehängten Werkstücken angeordnet sind. Geeignet ist dieses Maschinenkonzept auch für eine sog. Mehrdrahtanlage zum schneiderosiven Bearbeiten von einem oder mehreren Werkstücken, wobei mehrere Drahtführungen nebeneinander angeordnet sind. Hierdurch können mehrere Bearbeitungen gleichzeitig oder nacheinander mit verschiedenen Erodierdrahtsorten durchgeführt werden. Hierbei ist das erfindungsgemässe Maschinenkonzept besonders vorteilhaft, da die X/Y-Hauptbewegungen durch das Werkstück durchgeführt wird und die Drahtführungen keine, oder allenfalls nur kleine Bewegungen, z.B. in U/V-Richtung beim konischen Schneiden ausführen.

Ferner kommt bei der vorliegenden Erfindung als Vorteil hinzu, dass das bevorzugt kastenförmige Maschinengestell eine elektrisch abschirmende Wirkung gegenüber Störstrahlungen hat, insbesondere vorteilhaft bei mit Hochfrequenzspannung betriebenen Bearbeitungswerkzeugen, wie etwa Draht- oder Senkelektroden bei Funkenerosionsanlagen. Dort entfällt beispielsweise eine aufwendige Kabinenabschirmung, welche üblicherweise die gesamte Anlage umgibt.

Wie bereits vorstehend erwähnt, wird die funkenerosive Bearbeitung meistens in einem Bad bestehend aus einer dielektrischen Arbeitsflüssigkeit zum Spülen des Arbeitsspaltes durchgeführt. Bei einer bevorzugten Variante weist die erfindungsgemässe Funkenerosionsvorrichtung hierfür einen Behälter zur Aufnahme der Arbeitsflüssigkeit auf, der vertikal verschiebbar ist, wobei eine Säule, welche den unteren Führungskopf trägt, durch den Behälterboden hindurchtritt. Bei dieser Variante ist die Automatisierung der Behälterbewegung, d.h. das automatische Senken des Behälters, besonders einfach realisierbar und erlaubt ein Absenken ohne Entleervorgang. Wie zuvor erwähnt,führt der untere Führungskopf in der Regel keine Verfahrbewegung aus, so dass diese Säule, mit einer einfachen, handelsüblichen Dichtung gegenüber dem Behälterboden, z.B. einer Faltenbalgdichtung, abgedichtet ist. Selbstverständlich kann diese Säule über einen Antrieb, z.B. einen Z-Antrieb verfügen, der über die genannte Dichtung gegenüber dem Behälter abgedichtet ist.

Alternativ dazu ist ein Behälter zur Aufnahme der Arbeitsflüssigkeit vorgesehen, dessen Boden unbewegt und lediglich dessen Seitenwände in vertikaler Richtung versenkbar, verschiebbar oder ausschwenkbar sind. Bei dieser Variante ist der untere Führungskopf starr mit dem Behälterboden verbunden. Besonders vorteilhaft ist der untere Führungskopf vertikal soweit eingesenkt, dass er im Behälterboden intergriert ist. Ein derart eingesenkter unterer Drahtführungskopf vermindert ein etwaiges Kollisionsrisiko mit dem Werkstück und schützt ausserdem die im Führungskopf vorhandenen Zusatzmittel, z.B. zur Zuführung des Entladestromes und der Spülflüssigkeit, vor einem etwaigen Angriff durch die Arbeitsflüssigkeit.

Schliesslich ist bei einer weiteren bevorzugten Variante ein kastenförmiges Maschinengestell in der Werkstücksumgebung als Behälter zur Aufnahme der Arbeitsflüssigkeit ausgebildet.

Weitere Vorteile der Ausgestaltungen der Erfindung ergeben sich aus der nachfolgenden Beschreibung bevorzugter Ausführungsbeispiele. In der Beschreibung wird auf die beigefügte schematische Zeichnung Bezug genommen. In der Zeichnung zeigen:
- Fig. 1: eine Längsschnittansicht einer ersten Variante einer erfindungsgemässen Drahterosionsvorrichtung;
- Fig. 2: eine Längsschnittansicht einer zweiten Variante einer erfindungsgemässen Drahterosionsvorrichtung;
- Fig. 3: eine Längsschnittansicht einer dritten Variante einer erfindungsgemässen Drahterosionsvorrichtung;
- Fig. 4: eine perspektivische Teilansicht einer erfindungsgemässen Auslegung in Kastenbauweise (Fig. 4a) ; die Darstellung in Fig. 4a entlang der Linie I-I geschnitten (Fig. 4b) und einen Querschnitt entlang der Linie II-II in Fig. 4a (Fig. 4c);
- Fig. 5: eine perspektivische Teilansicht einer weiteren erfindungsgemässen Auslegung in Kastenbauweise einer Mehrdrahtanlage; und
- Fig. 6: eine Längsschnittansicht einer aus dem Stand der Technik bekannten Drahterosionsvorrichtung.

Im nachfolgenden wird die Erfindung anhand einer Drahterosionsvorrichtung beschrieben. Dies ist jedoch nicht einschränkend zu verstehen, da die vorliegende Erfindung ohne weiteres auch für die Antriebskinematik von Senkerosionsvorrichtungen Anwendung findet, bei welchen eine Bearbeitungselektrode gegenüber einem zu bearbeitenden Werkstück eine kontrollierte Relativbewegung durchführt. Ferner werden in den nachfolgenden Ausführungsbeispielen entsprechende Bauteile mit denselben Bezugszeichen bezeichnet.

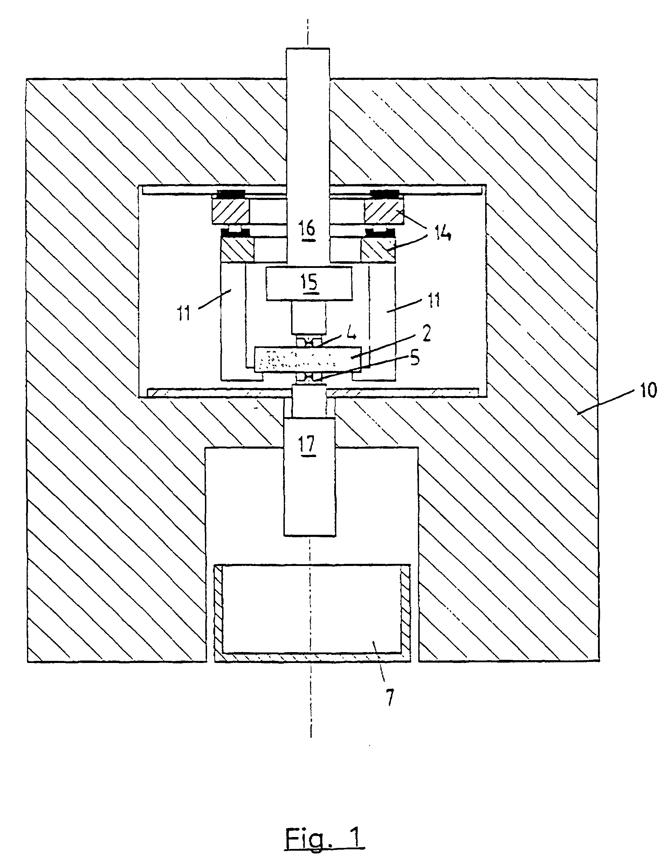

Die Figuren 1 bis 3 beschränken sich auf eine rein schematische Darstellung der wesentlichen, zum Verständnis der Erfindung dienenden Komponente in einer Drahterosionsvorrichtung. Grundelemente wie Generator und CNC-Steuerung sind nicht dargestellt, da sie als selbstverständlich vorausgesetzt werden. Es wird ferner eine Terminologie verwendet, die der leichten Lesbarkeit der Beschreibung dient, jedoch nicht einschränkend ist, beispielsweise beziehen sich die Ausdrücke "oben" bzw. "unten" auf Drahterosionsvorrichtungen mit vertikaler Arbeitsaufstellung.

Die in Fig. 1 dargestellte Drahterosionsvorrichtung hat ein geschlossenes Maschinengestell 10, ein sog. Portalgestell. Die ggf. offenen Seiten des Arbeitsraumes sind mit dichtenden (nicht gezeigten) Abdeckungen verschliessbar, so dass das Maschinengestell 10 zusammen mit der genannten Abdeckung einen Behälter zur Aufnahme einer dielektrischen Spülflüssigkeit ausbildet. Aufgrund seines symmetrischen Aufbaus und der mechanischen Stabilität ist hier das Portalgestellt bevorzugt. Selbstverständlich ist die Erfindung auch zusammen mit einem offenen Maschinengestell, einem sog. C-Gestell, vorteilhaft anwendbar.

Im Arbeitsraum der Drahterosionsvorrichtung gemäss Fig. 1 sind zwei Führungsköpfe in vertikaler Richtung übereinander und im Abstand voneinander angeordnet, deren obere mit 4 und deren untere mit 5 bezeichnet ist. Obere und untere Drahtführung sind mit der Zuführung des Entladestromes und der dielektrischen Spülflüssigkeit sowie einer Drahtspannvorrichtung in den Führungsköpfen 4 bzw. 5 jeweils baulich integriert.

Bei der funkenerosiven Bearbeitung wird ein - hier nicht dargestellter - Erodierdraht regelmässig von einer Vorratsrolle laufend abgezogen, durch einen Arbeitsraum in vertikaler Richtung zwischen dem oberen und dem unteren Führungskopf 4, 5 hindurchgeführt, hier von oben nach unten, und danach in einem Drahtauffangbehälter 7 entsorgt.

Zwischen den einander gegenüberliegenden Führungsköpfen 4, 5 befindet sich der Arbeitsraum der Drahterosionsvorrichtung, in welchem ein zu bearbeitendes Werkstück 2 aufgespannt ist. Nach der Anordnung gemäss Fig. 1 ist das Werkstück 2 über Spannmittel 11 von oben herab im Arbeitsraum der Drahterosionsvorrichtung aufgehängt, wobei die Spannmittel 11 ihrerseits von einem X/Y-Hauptachsenantrieb 14 getragen werden. Der X/Y-Hauptachsenantrieb 14, der auf der dem Arbeitsraum zugewandten Seite des oberen Abschnittes des Maschinengestells 10 angeordnet ist, erzeugt eine Bewegung in X/Y-Richtung, d.h. die die Schnittkontur bestimmende Relativbewegung zwischen dem Werkstück 2 und dem Erodierdraht. Dieser X/Y-Hauptachsenantrieb 14 umfasst einen oberen, entlang einer Schiene an der Innenseite des Maschinengestells 10 in X-Richtung bewegbaren, X-Schlitten und einen darauf aufgehängten, in Y-Richtung verschiebbaren, Y-Schlitten. Die X- und Y-Schlitten bilden so einen numerisch steuerbaren, rahmenförmigen kartesischen X/Y-Kreuztisch. Mit dem Y-Schlitten des X/Y-Hauptachsenantriebes 14 sind die Spannmittel 11 starr verbunden, so dass das Werkstück 2 von oben in den Arbeitsraum gehalten und in X/Y-Hauptachsenrichtung relativ zum Erodierdraht bewegt wird. Beide Schlitten des X/Y-Hauptachsenantriebes 14 sind in Drahtablaufrichtung gesehen mit einer Durchgangsöffnung ausgebildet. Durch diese Durchgangsöffnung ragt ein oberer Z-Antrieb 16, ausgehend vom Maschinengestell 10, in den Arbeitsraum der Drahterosionsvorrichtung zur Höhenverstellung des oberen Führungskopfes 4. Ein entsprechender unterer Z-Antrieb 17 ragt unter geeigneter Abdichtung aus dem Boden des Maschinengestells 10 in den Arbeitsraum und trägt an seinem vorderen Ende den unteren Führungskopf 5.

Zum Schneiden konischer Schnitte ist zusätzlich ein mit dem oberen Führungskopf 4 gekoppelter - schematisch angedeute ter - U/V-Antrieb 15 zur kartesischen Verstellung des oberen gegenüber dem unteren Führungskopf 5 in U/V-Richtung vorgesehen. Dabei ist der U/V-Antrieb 15 dem oberen Z-Antrieb 16 nachgeschaltet. Der obere Führungskopf 4 hängt demnach gewissermassen am U- oder V-Schlitten des U/V-Antriebs 15, der seinerseits über den V- bzw. U-Schlitten mit dem Z-Antrieb 16 gekoppelt ist. Dieser U/V-Antrieb 15 entspricht seinem Aufbau nach der Bauweise eines kartesischen Kreuzschlittens.

Die erfindungsgemässe Drahterosionsvorrichtung gemäss Fig. 1 erlaubt aufgrund der hohen mechanischen Steifigkeit und aufgrund des symmetrischen Aufbaus der Führungsköpfe 4, 5 und der Vermeidung von Dichtungselementen eine qualitativ hochwertige Funkenerosionsbearbeitung.

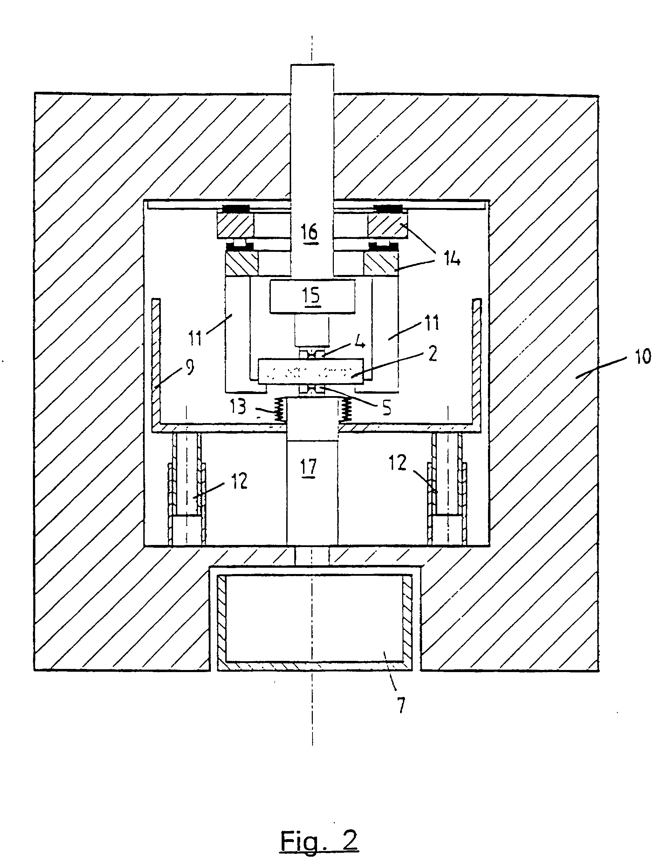

Die Drahterosionsvorrichtung gemäss Fig. 2 entspricht hinsichtlich der Anordnung der Führungsköpfe 4, 5 des Werkstückes 2 sowie der X/Y- bzw. U/V-Antriebe 14, 15 derjenigen der Drahterosionsvorrichtung gemäss Fig. 1. Jedoch ist nunmehr ein Behälter 9 zur Aufnahme der dielektrischen Spülflüssigkeit um den Arbeitsraum der Drahterosionsvorrichtung herum vorgesehen. Dieser Behälter 9 ist innerhalb des Maschinengestells 10 über einen geeigneten Behälterantrieb 12 in vertikaler Richtung verschiebbar. Je nach Stand der Bearbeitung wird der Behälter 9 automatisch unter Kontrolle der CNC-Steuerung der Drahterosionsvorrichtung nach oben bzw. nach unten gefahren, um beispielsweise einen einfachen Zugang zum Arbeitsraum, etwa zum Wechseln des Werkstückes 2, zu schaffen.

Ein unterer Z-Antrieb 17, der den unteren Führungskopf 5 trägt, ragt dabei durch den Boden des Behälters 9 vertikal hindurch und ist gegenüber dem Boden des Behälters 9 durch ein Dichtungselement 13 abgedichtet.

Das Dichtungselement 13, welches eine Faltenbalgdichtung sein kann, beeinträchtigt die Präzision der Maschine kaum. Erstens wird Behälter 9 nur während der Bearbeitungspausen bewegt, und zweitens tritt im Falle einer Bewegung des unteren Z-Antriebes 17 eine allfällige Reibungskraft nur in der sehr steifen Z-Richtung auf.

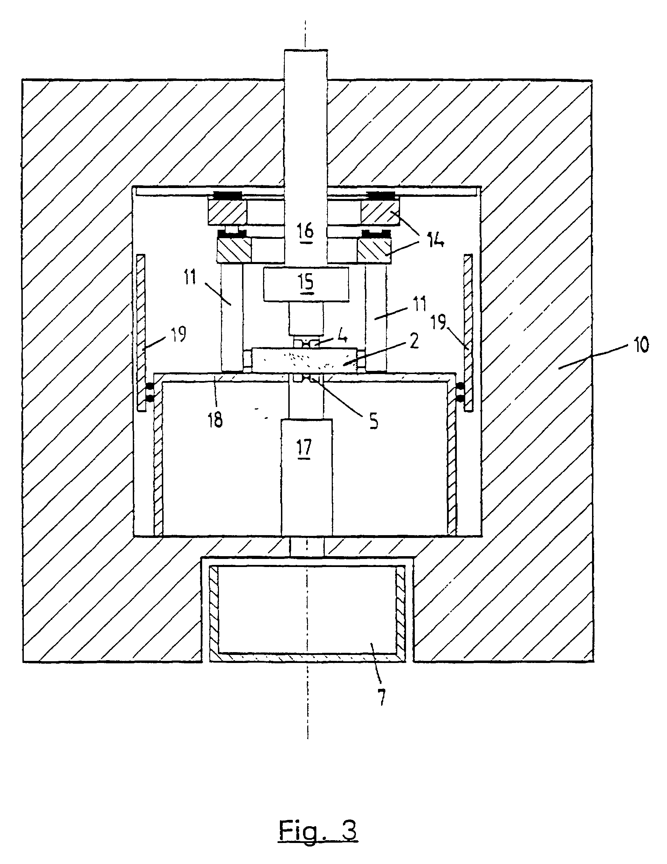

Auch die in Fig. 3 dargestellte Drahterosionsvorrichtung entspricht hinsichtlich der Anordnung der Führungsköpfe 4, 5 des Werkstückes 2 sowie der X/Y- bzw. U/V-Antriebe 14, 15 derjenigen der Drahterosionsvorrichtung gemäss Fig. 1. Jedoch ist hier ein Behälter 9 zur Aufnahme der dielektrischen Spülflüssigkeit vorgesehen, dessen Boden 18 unbewegt und dessen Wände 19 abgedichtet gegenüber Seitenabschnitten des Behälterbodens 18 in vertikaler Richtung verschiebbar sind. Auch in diesem Falle ist die Bewegung der Behälterwände 19 unter Kontrolle der CNC-Steuerung automatisiert. Weiterhin ist der untere Führungskopf 5 so tief angeordnet, dass der Führungskopf 5 unterhalb der Ebene des Behälterbodens 18 liegt, gewissermassen im Behälterboden 18 mit integriert ist. Der Abstand zwischen dem Behälterboden 18 und der unteren Werkstücksoberfläche ist dabei sehr gering.

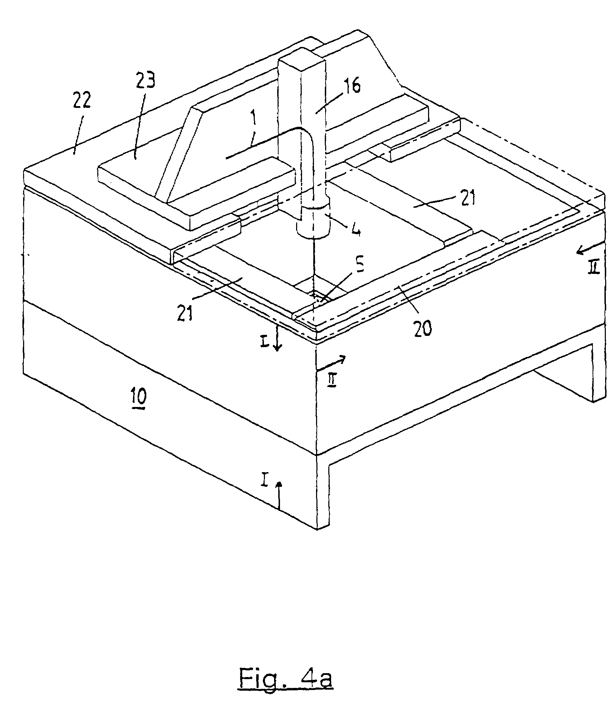

In den Figuren 4a bis 4c sind verschiedene Teilansichten einer Antriebsanordnung in sog. Rahmenbauweise einer weiteren erfindungsgemässen Drahterosionsvorrichtung veranschaulicht.

Fig. 4a zeigt perspektivisch eine 5-Achsenkinematik, bestehend aus einem X/Y-Hauptachsenantrieb, einem U/V-Antrieb und einem Z-Antrieb, beispielsweise für die Anordnung auf der dem Arbeitsraum zugewandten Seite im Inneren des Maschinengestells 10 einer Drahterosionsvorrichtung der in Fig. 1 gezeigten Art.

Gemäss Fig. 4a bildet das Maschinengestell 10, das im wesentlichen die Form eines rechteckigen Kastens hat, eine Teil der Antriebsanordnung. Innerhalb des kastenförmigen Maschinengestells 10 wird ein rahmenförmiger X-Schlitten 20 (sog. X-Rahmen) an gegenüberliegenden Wänden an Schienen geführt, derart, dass der X-Schlitten 20 um die Differenz der Seitenlängen zwischen X-Schlitten- und Maschinengestellkasten in X-Richtung verschiebbar ist. Innerhalb des X-Schlittens 20 wird ein rahmenförmiger Y-Schlitten 21 (Sog. Y-Rahmen) in Y-Richtung verschiebbar geführt. Dabei greift der Y-Schlitten 21 Über die Höhe der in Y-Richtung verlaufenden Seitenwand des X-Schlittens 20 und ist um die Differenz der Seitenlänge zwischen Y-Schlitten- und X-Schlittenseite in Y-Richtung verschiebbar. Demnach bilden X- und Y-Schlitten 20, 21 einen kartesischen X/Y-Hauptachsenantrieb. Ein zu bearbeitendes Werkstück oder eine Palette mit Werkstücken ist im Inneren des Y-Schlittens 21 über geeignete Spannmittel aufgespannt.

Ein hier schematisch dargestellter Erodierdraht 1 wird von einem (nicht dargestellten) Drahtversorgungssystem in Richtung eines oberen Führungskopfes 4 zugeführt und durch den Arbeitsraum zwischen dem oberen und einem hierzu symmetrischen (in der Figur nur angedeuteten) unteren Führungskopf 5 in vertikaler Richtung hindurchgeführt. Die für die Schnittkontur massgebliche Relativbewegung zwischen dem Werkstück und dem Erodierdraht 1 wird hier durch den mit dem Werkstück gekoppelten X/Y-Antrieb 20, 21 erzeugt. Zum Verschieben des oberen Führungskopfes 4 gegenüber dem unteren Führungskopf 5 (Konischschneiden) ist ferner ein U/V-Antrieb vorgesehen. Dieser umfasst einen V-Schlitten 22, der auf der Oberkante des Maschinengestells 10 in V-Richtung verschiebbar geführt wird. Weiter ist auf dem V-Schlitten 22 ein in U-Richtung horizontal verschiebbarer U-Schlitten23 angeordnet. Der obere Führungskopf 4 kann demnach über diesen kartesischen U/V-Antrieb in der U/V-Ebene relativ zum unteren Führungskopf verschoben werden. Schliesslich kann mit dem oberen Führungskopf 4 ein Z-Antrieb 16 gekoppelt sein, welcher den oberen Führungskopf 4 zusätzlich vertikal verstellbar macht.

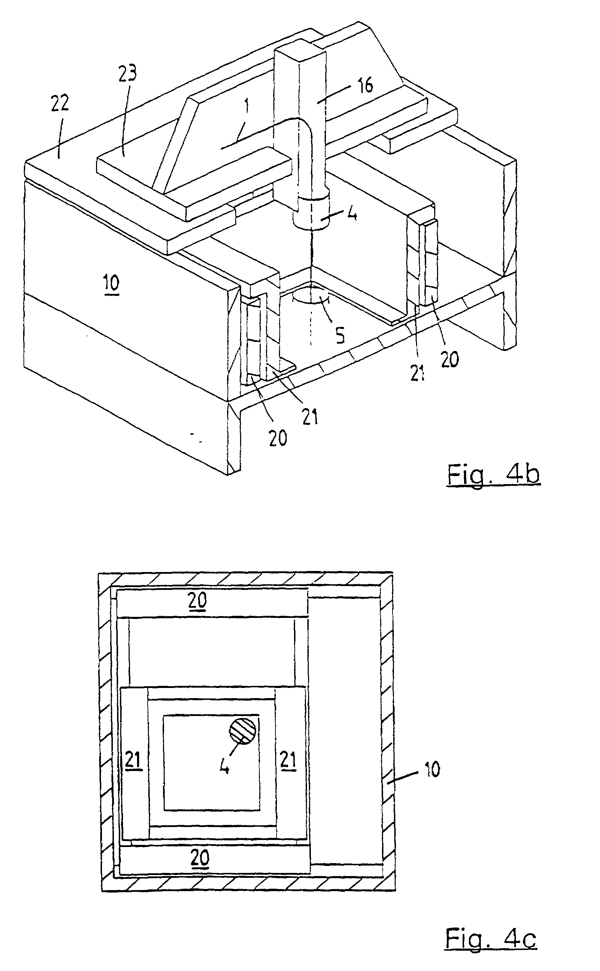

Zur besseren Veranschaulichung zeigt Fig. 4b einen Seitenschnitt entlang der Linie I-I in Fig. 4a und 4c einen Querschnitt entlang der Linie II-II in Fig. 4a. Dieselben technischen Merkmale sind dabei mit denselben Bezugszeichen gekennzeichnet.

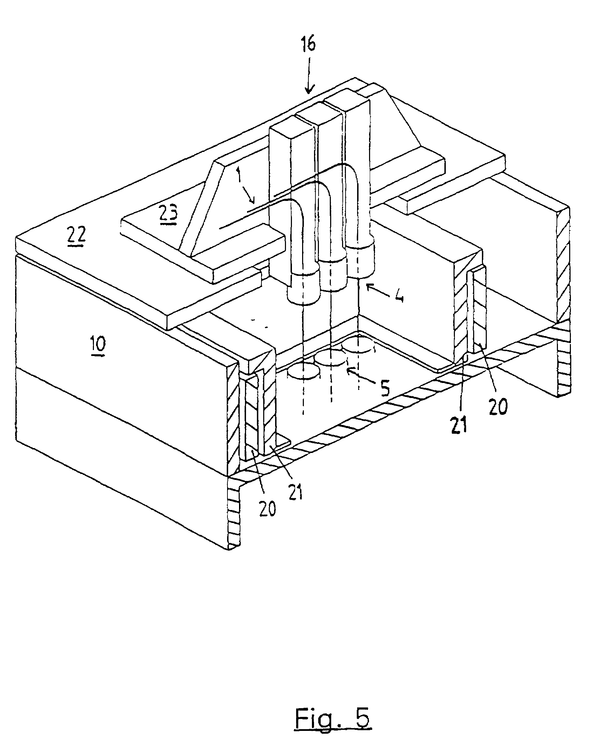

Schliesslich zeigt Fig. 5 eine 7-Achsenanordnung, welche im Grundaufbau und Kinematik derjenigen der Fig. 4a bis 4c entspricht, hier jedoch für eine Mehrdrahtanlage ausgelegt ist. Es sind dabei drei nebeneinander angeordnete obere Führungsköpfe 4, welche jeweils - in der Fig. 5 lediglich angedeutet - entsprechenden unteren Führungsköpfen 5 zugeordnet sind. Die drei oberen Führungsköpfe 4 sind gemeinsam mit dem U-Schlitten 23 des U/V-Antriebes gekoppelt und damit gemeinsam gegenüber den drei unteren Führungsköpfen 5 in U/V-Richtung verschiebbar. Jeder obere Führungskopf 4 ist jeweils zusätzlich mit einem Z-Antrieb 16 ausgestattet, zur Höhenverstellung in Z1-, Z2-, bzw. Z3-Richtung. Während der funkenerosiven Bearbeitung ragen einer oder mehrere obere Führungsköpfe 4 in den Y-Schlitten der vorgeschlagenen rahmenförmigen Antriebskinematik hinein.

Mit einer derartigen Mehrelektrodenanlage lassen sich mehrere Bearbeitungen an demselben oder verschiedenen Werkstücken gleichzeitig oder an demselben oder verschiedenen Werkstücken beispielsweise an verschiedenen Erodierorten nacheinander durchführen.

Es können auch nacheinander oder gleichzeitig mehrere, sehr genau positionierte Startbohrungen erodiert werden. Dies wird besonders für die Mikrobearbeitung immer wichtiger, z.B. für Spinndüsen, wo die Startbohrung im Durchmesser meist nur unwesentlich grösser sein darf als die Schnittbreite der nachfolgenden Drahterosionsbearbeitung.

## Patentansprüche

1. Verfahren zum funkenerosiven Bearbeiten eines Werkstückes mittels einer oder mehrerer Draht- oder Senkelektroden, die in oberhalb und unterhalb eines Arbeitsraumes angeordneten Führungsköpfen geführt werden,
- wobei das Werkstück (2) über einen X/Y-Hauptachsenantrieb (14) bewegt und dabei von mindestens einer der Bearbeitungselektroden erodiert wird,
- dabei die X/Y-Ebene horizontal ausgerichtet ist,
- und das Maschinengestell (10), ein Behalter (9) zur Aufnahme einer Arbeitsflüssigkeit und der oder jeder untere Führungskopf (5) keine X/Y-Bewegung ausführen,
**dadurch gekennzeichnet, daß**
- der X/Y-Hauptachsenantrieb (14), der die Bewegung des Werkstückes (2) in der X/Y-Ebene ausführt, oberhalb des Arbeitsraumes am ruhenden Maschinengestell (10) angeordnet ist.

2. Verfahren nach Anspruch 1, **dadurch gekennzeichnet, daß** der oder jeder obere Führungskopf (4) und/oder der oder jeder untere Führungskopf (5) über einen gemeinsamen oder individuellen Z-Antrieb (16; 17) bewegt wird.

3. Verfahren nach Anspruch 1, **dadurch gekennzeichnet, daß** der oder jeder obere Fuhrungskopf (4) über einen gemeinsamen oder individuellen U/V-Antrieb (15) bewegt wird.

4. Verfahren nach einem der Ansprüche 1 bis 3 , **dadurch gekennzeichnet, daß**
- die oder jede drahtförmige Bearbeitungselektrode (1) im wesentlichen in vertikaler Richtung durch den Behälter (9), und den entsprechenden unteren Führungskopf (5) geführt wird, und
- der oder jeder untere Führungskopf (5) die zugeordnete drahtformige Bearbeitungselektrode (1) so dicht umschliesst, dass ein Auslaufen eines Dielektrikums aus dem Behälter (9) verhindert wird oder kontrolliert erfolgt.

5. Verfahren nach einem der Ansprüche 1 bis 4, **dadurch gekennzeichnet, daß**
- mehrere drahtformige Bearbeitungselektroden (1) mit mehreren oberen Führungsköpfen (4) und mehreren unteren Führungsköpfen (5) angeordnet sind,
- die drahtförmigen Bearbeitungselektroden untereinander parallel beabstandet und im wesentlichen vertikal ausgerichtet sind, und
- gleichzeitig mehrere identische Schnittkonturen erodiert werden.

6. Verfahren nach Anspruch 1 oder 2, **dadurch gekennzeichnet, daß**
- mehrere Senkelektroden mit mehreren oberen Führungsköpfen (4) und/oder mehrere Senkelektroden mit mehreren unteren Führungsköpfen (5) angeordnet sind,
- die Senkelektroden untereinander parallel beabstandet und im wesentlichen vertikal ausgerichtet sind, und
- gleichzeitig mehrere identische Senkkonturen erodiert werden.

7. Verfahren nach einem der Ansprüche 1 bis 4, **dadurch gekennzeichnet, daß**
- mehrere drahtförmige Bearbeitungselektroden (1) von unterschiedlicher Qualität und/oder unterschiedlichem Durchmesser in mehreren oberen Führungsköpfen (4) bereitgestellt werden,
- jeweils eine der Bearbeitungselektroden (1) ausgewählt wird, und mittels dem zugeordneten Z-Antrieb (16) und/oder U/V-Antrieb (15) über einen zugeordneten unteren Führungskopf (5) positioniert wird,
- im Falle von mehreren unteren Führungsköpfen (5) das Werkstück (2) uber den X/Y-Hauptachsenantrieb (14) so bewegt wird, daß der Startpunkt der auszuführenden Kontur mit dem ausgewählten unteren Führungskopf (5) übereinstimmt, und
- die drahtförmige Bearbeitungselektrode (1) automatisch eingefädelt und nach beendeter Bearbeitung automatisch abgetrennt wird.

8. Verfahren nach Anspruch 1 oder 2, **dadurch gekennzeichnet, daß**
- mehrere Senkelektroden (1) von unterschiedlicher Qualitat, unterschiedlichem Durchmesser und/oder unterschiedlicher Form in mehreren oberen Fuhrungsköpfen (4) oder mehreren unteren Führungsköpfen (5) bereitgestellt sind,
- eine ausgewählte Senkelektrode mittels dem zugeordneten Z-Antrieb (16; 17), dem U/V-Antrieb (15) und/oder dem Hauptachsenantrieb (14) beim Startpunkt des auszuführenden Erosionsprogrammes positioniert wird, und
- mittels dieser Antriebe (14, 15, 16; 17) Senkkonturen oder Startbohrungen erodiert werden.

9. Verfahren nach Anspruch 8, **dadurch gekennzeichnet, daß** die Startbohrungen mit einer ausgewählten Senkelektrode in einem oberen Führungskopf (4) von oben und einer ausgewählten Senkelektrode in einem unteren Führungkopf (5) von unten erodiert werden.

10. Vorrichtung zum funkenerosiven Bearbeiten eines Werkstuckes, mit:
- einer oder mehreren Draht- oder Senkelektroden, die in oberhalb und unterhalb eines Arbeitsraumes angeordneten Führungsköpfen geführt sind,
- einem X/Y-Hauptachsenantrieb (14) zum Bewegen des Werkstückes (2) in der X/Y-Ebene, die horizontal ausgerichtet ist,
- wobei das Maschinengestell (10), ein Behälter (9) zur Aufnahme einer Arbeitsflüssigkeit und der oder jeder untere Führungskopf (5) bezüglich der X/Y-Ebene unbeweglich sind,
**dadurch gekennzeichnet, daß**
- der X/Y-Hauptachsenantrieb (14), der die Bewegung des Werkstückes (2) in der X/Y-Ebene ausfuhrt, oberhalb des Arbeitsraumes am ruhenden Maschinengestell (10) angeordnet ist.

11. Vorrichtung nach Anspruch 10, dadurch gekennzeichet, daß der oder jeder untere Führungskopf durch den Boden des Behälters (9) hindurchtritt.

12. Vorrichtung nach Anspruch 10 oder 11, **dadurch gekennzeichnet, daß** der oder jeder obere Führungskopf (4) konstruktiv ebenfalls ein Teil der ruhenden Einheit ist.

13. Vorrichtung nach einem der Anspruche 10 bis 12, **dadurch gekennzeichnet, daß** der oder jeder obere Fuhrungskopf (4) über einen gemeinsamen oder je einen Z-Antrieb (16) bewegt wird.

14. Vorrichtung nach einem der Ansprüche 10 bis 13, dadurch daß der oder jeder obere Führungskopf (4) über einen gemeinsamen oder je einen U/V-Antrieb (15) mit der ruhenden Einheit verbunden ist.

15. Vorrichtung nach einem der Ansprüche 10 bis 14, **dadurch gekennzeichnet, daß**
- der oder jeder untere Führungskopf (5) über einen gemeinsamen oder einen individuellen unteren Z-Antrieb (17) verfügt, und
- der oder jeder untere Z-Antrieb (17) mit einem Dichtungselement (13) versehen ist, um das Auslaufen eines Dielektrikums aus dem Behälter (9) zu vermeiden.

16. Vorrichtung nach einem der Ansprüche 10 bis 15, **dadurch gekennzeichnet, daß**
- die Behälterwände (19) ausschwenkbar, ausschiebbar oder in vertikaler Richtung absenkbar ausgestaltet sind, und
- Dichtungselemente (13) in der Bewegungszone vorgesehen sind, um ein Auslaufen des Dielektrikums aus dem Behälter (9) zu vermeiden.

17. Vorrichtung nach einem der Ansprüche 10 bis 15, **dadurch gekennzeichnet, daß** das Maschinengestell (10) kastenförmig ausgestaltet ist und die Funktion des Behalters (9) übernimmt.

18. Vorrichtung nach einem der Ansprüche 10 bis 17, **dadurch gekennzeichnet, daß**
- der X/Y-Hauptachsenantrieb (14) rahmenförmig ausgebildet ist,
- wobei ein erster Achsenrahmen (20) mit seinen Führungen an der ruhenden Einheit befestigt ist, und ein zweiter Achsenrahmen (21) mit seinen Führungen auf dem ersten Achsenrahmen quer dazu derart befestigt ist, daß eine karthesische X/Y Bewegung ausgeführt werden kann, und
- das Werkstück (2) über Spannmittel (11) am oder im zweiten Achsenrahmen befestigt ist.

19. Vorrichtung nach Anspruch 18, **dadurch gekennzeichnet, daß** mindestens ein oberer Z-Antrieb (16) und/oder ein unterer Z-Antrieb (17) durch die Rahmenöffnung des rahmenförmigen X/Y-Hauptachsenantriebes (14) die Bewegung in Z-Richtung ausführt.

## Claims

1. Method for the electrical discharge machining of a workpiece by means of one or more wire or sinking electrodes, which are guided in guide heads disposed above and below a working space,
- wherein the workpiece (2) is moved via an X/Y main axis drive (4) and in the process is eroded by at least one of the machining electrodes,
- the X/Y plane is oriented horizontally,
- and the machine frame (10), a tank (9) for holding a working fluid and the or each lower guide head (5) does not execute an X/Y movement,
**characterised in that**
- the X/Y main axis drive (14), which executes the movement of the workpiece (2) in the X/Y plane, is disposed above the working space at the stationary machine frame (10).

2. Method according to Claim 1, **characterised in that** the or each upper guide head (4) and/or the or each lower guide head (5) is/are moved via a common or an individual Z drive (16; 17).

3. Method according to Claim 1, **characterised in that** the or each upper guide head (4) is moved via a common or an individual U/V drive (15).

4. Method according to any one of Claims 1 to 3,
**characterised in that**
- the or each wire-like machining electrode (1) is guided substantially in the vertical direction through the tank (9) and the corresponding lower guide head (5), and
- the or each lower guide head (5) encloses the associated wire-like machining electrode (1) so tightly that a dielectric is prevented from running out of the tank (9), or can only do so in a controlled fashion.

5. Method according to any one of Claims 1 to 4,
**characterised in that**
- a plurality of wire-like machining electrodes (1) are disposed with a plurality of upper guide heads (4) and a plurality of lower guide heads (5),
- the wire-like machining electrodes are spaced apart in parallel and oriented substantially vertically, and
- a plurality of identical cut contours are simultaneously eroded.

6. Method according to Claim 1 or 2, **characterised in that**
- a plurality of sinking electrodes are disposed with a plurality of upper guide heads (4) and/or a plurality of sinking electrodes with a plurality of lower guide heads (5),
- the sinking electrodes are spaced apart in parallel and oriented substantially vertically, and
- a plurality of identical sunk contours are simultaneously eroded.

7. Method according to any one of Claims 1 to 4,
**characterised in that**
- a plurality of wire-like machining electrodes (1) of differing quality and/or differing diameter are provided in a plurality of upper guide heads (4),
- one of the machining electrodes (1) is in each case selected and positioned by means of the associated Z drive (16) and/or the U/V drive (15) via an associated lower guide head (5),
- if there are a plurality of lower guide heads (5), the workpiece (2) is moved via the X/Y main axis drive (14) such that the starting point of the contour which is to be executed coincides with the selected lower guide head (5), and
- the wire-like machining electrode (1) is automatically threaded through and automatically severed upon completion of machining.

8. Method according to Claim 1 or 2, **characterised in that**
- a plurality of sinking electrodes (1) of differing quality, differing diameter and/or differing form are provided in a plurality of upper guide heads (4) or a plurality of lower guide heads (5),
- a selected sinking electrode is positioned by means of the associated Z drive (16; 17), the U/V drive (15) and/or the main axis drive (14) at the starting point of the erosion program which is to be executed, and
- sunk contours or starting bores are eroded by means of these drives (14, 15, 16; 17).

9. Method according to Claim 8, **characterised in that** the starting bores are eroded by a selected sinking electrode in an upper guide head (4) from above and a selected sinking electrode in a lower guide head (5) from below.

10. Apparatus for the electrical discharge machining of a workpiece, with:
- one or more wire or sinking electrodes, which are guided in guide heads disposed above and below a working space,
- an X/Y main axis drive (14) for moving the workpiece (2) in the X/Y plane, which is oriented horizontally,
- wherein the machine frame (10), a tank (9) for holding a working fluid and the or each lower guide head (5) are immobile in relation to the X/Y plane,
**characterised in that**
- the X/Y main axis drive (14), which executes the movement of the workpiece (2) in the X/Y plane, is disposed above the working space at the stationary machine frame (10).

11. Apparatus according to Claim 10, **characterised in that** the or each lower guide head passes through the bottom of the tank (9).

12. Apparatus according to Claim 10 or 11, **characterised in that** the or each upper guide head (4) is also a structural part of the stationary unit.

13. Apparatus according to any one of Claims 10 to 12, **characterised in that** the or each upper guide head (4) is moved via a common or a respective Z drive (16).

14. Apparatus according to any one of Claims 10 to 13, **characterised in that** the or each upper guide head (4) is connected via a common or a respective U/V drive (15) to the stationary unit.

15. Apparatus according to any one of Claims 10 to 14, **characterised in that**
- the or each lower guide head (5) has a common or an individual lower Z drive (17), and
- the or each lower Z drive (17) is provided with a sealing element (13) in order to prevent the dielectric from running out of the tank (9).

16. Apparatus according to any one of Claims 10 to 15, **characterised in that**
- the tank walls (19) are configured such that they can be swung out, pushed out or lowered in the vertical direction, and
- sealing elements (13) are provided in the zone of movement in order to prevent the dielectric from running out of the tank (9).

17. Apparatus according to any one of Claims 10 to 15, **characterised in that** the machine frame (10) is box-shaped and performs the function of the tank (9).

18. Apparatus according to any one of Claims 10 to 17, **characterised in that**
- the X/Y main axis drive (14) is frame-shaped,
- wherein a first axial frame (20) is secured by its guides to the stationary unit, and a second axial frame (21) is secured by its guides to the first axial frame transversely thereto, that a cartesian X/Y movement can be executed, and
- the workpiece (2) is secured to or in the second axial frame via clamping means (11).

19. Apparatus according to Claim 18, **characterised in that** at least one upper Z drive (16) and/or one lower Z drive (17) execute(s) the movement in the Z direction through the frame opening of the frame-shaped X/Y main axis drive (14).

## Revendications

1. Procédé d'usinage par électroérosion d'une pièce à usiner au moyen d'une ou plusieurs électrodes-fils ou électrodes à lamer qui sont guidées dans des têtes de guidage disposées au-dessus et au-dessous d'une chambre de travail
- dans lequel la pièce à usiner (2) se déplace au moyen d'un mécanisme d'entraînement selon les axes principaux X/Y (14) et y est érodée par au moins l'une des électrodes d'usinage,
- dans lequel le plan X/Y est orienté horizontalement,
- et dans lequel le bâti de machine (10), un récipient (9) pour recevoir un liquide de travail et la, ou chaque, tête inférieure de guidage (5) n'exécute pas de déplacement selon les axes X/Y
**caractérisé par le fait,**
- **que** le mécanisme d'entraînement selon les axes principaux X/Y (14), qui réalise le déplacement de la pièce à usiner (2) dans le plan X/Y, est disposé au-dessus de la chambre de travail, sur le bâti de machine fixe (10).

2. Procédé selon la revendication 1, **caractérisé par le fait que** la, ou chaque, tête supérieure de guidage (4) et/ou la, ou chaque, tête inférieure de guidage (5) se déplace au moyen d'un mécanisme d'entraînement, commun ou individuel, selon l'axe Z (16 ; 17).

3. Procédé selon la revendication 1, **caractérisé par le fait que** la, ou chaque, tête supérieure de guidage (4) se déplace au moyen d'un mécanisme d'entraînement, commun ou individuel, selon les axes U/V, (15).

4. Procédé selon l'une des revendications 1 à 3, **caractérisé par le fait**
- **que** la, ou chaque, électrode d'usinage en forme de fil (1) est essentiellement guidée en direction verticale, à travers le récipient (9) et la tête inférieure de guidage (5) correspondante,
- **que** la, ou chaque, tête inférieure de guidage (5) enserre si étroitement l'électrode d'usinage en forme de fil (1) associée qu'un écoulement d'un diélectrique hors du récipient (9) est empêché ou se fait de façon commandée.

5. Procédé selon l'une des revendications 1 à 3, **caractérisé par le fait**
- **que** sont disposées plusieurs électrodes d'usinage (1) en forme de fil avec plusieurs têtes supérieures de guidage (4) et plusieurs têtes inférieures de guidage (5),
- **que** les électrodes d'usinage en forme de fil sont parallèles l'une à l'autre et à distance l'une de l'autre et sont essentiellement orientées verticalement
- **que** plusieurs contours de coupe sont érodés simultanément.

6. Procédé selon la revendication 1 où 2, **caractérisé par le fait**
- **que** sont disposées plusieurs électrodes à lamer avec plusieurs têtes supérieures de guidage (4) et/ou plusieurs électrodes à lamer avec plusieurs têtes inférieures de guidage (5),
- que les électrodes à lamer sont parallèles l'une à l'autre et à distance l'une de l'autre et sont essentiellement orientées verticalement et
- **que** plusieurs contours à lamer identiques sont érodés simultanément.

7. Procédé selon l'une des revendications 1 à 4, **caractérisé par le fait**
- **que** plusieurs électrodes d'usinage en forme de fil (1), de qualité différente et/ou de diamètre différent, sont préparées dans plusieurs têtes supérieures de guidage (4) ;
- **que** l'on choisit chaque fois l'une des électrodes d'usinage (1) et qu'au moyen du mécanisme d'entraînement sur leur axe Z associé, (16), et/ou du mécanisme d'entraînement selon les axes U/V (15), elle se positionne au-dessus d'une tête inférieure de guidage associée (5),
- dans le cas de plusieurs têtes inférieures de guidage (5), la pièce à usiner (2) se déplace, au moyen du mécanisme d'entraînement selon les axes principaux X/Y (14), de façon que le point de départ du contour à exécuter coïncide avec la tête inférieure de guidage choisie (5), et
- **que** l'électrode d'usinage en forme de fil (1) s'enfile automatiquement et se sépare automatiquement une fois l'usinage terminé.

8. Procédé selon la revendication 1 ou 2, **caractérisé par le fait**
- **que** plusieurs électrodes à lamer (1), de qualité différente, de diamètre différent et/ou de forme différente, sont préparées dans plusieurs têtes supérieures de guidage (4) ou plusieurs têtes inférieures de guidage (5),
- **qu'**au moyen du mécanisme d'entraînement selon l'axe Z, associé, (16 ; 17), du mécanisme d'entraînement selon les axes U/V (15) et/ou des mécanismes d'entraînement selon les axes principaux (14), une électrode à lamer choisie se positionne au point de départ du programme d'érosion à exécuter, et
- **qu'**au moyen de ces mécanismes d'entraînement (14, 15, 16 ; 17), des contours à lamer ou des perçages de départ sont érodés.

9. Procédé selon la revendication 8, **caractérisé par le fait que** les perçages de départ sont érodés, d'en haut, par une électrode à lamer choisie, située dans une tête supérieure de guidage (4) et, d'en bas, par une électrode à lamer choisie, située dans une tête inférieure de guidage (5).

10. Dispositif d'usinage par électroérosion d'une pièce à usiner, comportant :
- une ou plusieurs électrodes-fils ou électrodes à lamer, qui sont guidées dans des têtes de guidage disposées au-dessus et au-dessous d'un espace de travail,
- un mécanisme d'entraînement selon les axes principaux X/Y (14) pour déplacer la pièce à usiner (2) dans le plan X/Y qui est orienté horizontalement,
- dans lequel le bâti de machine (10), un récipient (9) pour recevoir un liquide de travail et la, ou chaque, tête inférieure de guidage (5) sont immobiles dans le plan X/Y,
**caractérisé par le fait**
- **que** le mécanisme d'entraînement selon les axes principaux X/Y (14), qui réalise le déplacement de la pièce à usiner (2) dans le plan X/Y, est disposé au-dessus de la chambre de travail, sur le bâti de machine fixe (10).

11. Dispositif selon la revendication 10, **caractérisé par le fait que** la, ou chaque, tête inférieure de guidage passe à travers le plancher du récipient (9).

12. Dispositif selon la revendication 10 ou 11, **caractérisé par le fait que** la, ou chaque, tête supérieure de guidage (4) est également, au point de vue construction, une partie de l'ensemble fixe.

13. Dispositif selon l'une des revendications 10 à 12, **caractérisé par le fait que** la, ou chaque, tête supérieure de guidage (4) se déplace au moyen d'un mécanisme d'entraînement selon l'axe Z, commun ou individuel (16).

14. Dispositif selon l'une des revendications 10 à 13, **caractérisé par le fait que** la, ou chaque, tête supérieure de guidage (4) est reliée à l'ensemble fixe par l'intermédiaire d'un mécanisme d'entraînement selon les axes U/V (15), commun ou individuel.

15. Dispositif selon l'une des revendications 10 à 14, **caractérisé par le fait**
- **que** la, ou chaque, tête inférieure de guidage (5) dispose d'un mécanisme d'entraînement inférieur selon l'axe Z (17), commun ou individuel et
- **que** le, ou chaque, mécanisme d'entraînement inférieur selon l'axe Z (17) comporte un élément d'étanchéité (13) pour éviter l'écoulement d'un diélectrique hors du récipient (9).

16. Dispositif selon l'une des revendications 10 à 15, **caractérisé par le fait**
- **que** les parois du récipient (19) sont réalisées pivotantes, coulissantes ou descendantes selon la direction verticale, et
- **que** des éléments d'étanchéité (16) sont prévus dans la zone du déplacement pour éviter un écoulement du diélectrique hors du récipient (9).

17. Dispositif selon l'une des revendications 10 à 15, **caractérisé par le fait que** le bâti de machine (10) est réalisé en forme de caisson et assure la fonction du récipient (9).

18. Dispositif selon l'une des revendications 10 à 17, **caractérisé par le fait**
- **que** le mécanisme d'entraînement selon les axes principaux X/Y (14) est conçu en forme de cadre,
- dans lequel un premier cadre axial (20) est fixé, par ses guidages, sur l'ensemble fixe, et un second cadre axial (21) est fixé, par ses guidages, sur le premier cadre axial, transversalement à ce cadre, de façon qu'un déplacement cartésien X/Y puisse s'exécuter,
- **que** la pièce à usiner (2) est fixée, par un moyen de bridage (11), sur ou dans le second cadre axial.

19. Dispositif selon la revendication 18, **caractérisé par le fait qu'**au moins un mécanisme d'entraînement supérieur selon l'axe Z (16) et/ou un mécanisme d'entraînement inférieur selon l'axe Z (17) exécute le déplacement selon la direction Z à travers l'ouverture du mécanisme d'entraînement selon les axes principaux X/Y (14), en forme de cadre.
